# EUROPÄISCHE PATENTSCHRIFT

(11) **EP 3 167 703 B1**
(45) Veröffentlichungstag und Bekanntmachung des Hinweises auf die Patenterteilung: **10.07.2019**
(21) Anmeldenummer: 16193419.5
(22) Anmeldetag: 12.10.2016
(51) Int. Cl.: A01D 34/00, A01D 34/74

(54) **AUTONOMES ARBEITSGERÄT**
AUTONOMOUS WORK DEVICE
APPAREIL DE TRAVAIL AUTONOME

(30) Priorität: 13.11.2015 DE 102015222376
(43) Veröffentlichungstag der Anmeldung: 17.05.2017
(73) Patentinhaber: ROBERT BOSCH GMBH, 70442 Stuttgart (DE)
(72) Erfinder: Ager, Chris, Suffolk, Suffolk IP425 (GB); Tonks, Philip, Stowmarket, Suffolk IP14 (GB); Armstrong, Gavin, Ben, Tostock Suffork, Suffolk IP309GH (GB)

(56) Entgegenhaltungen:
- EP-A1- 2 783 563
- WO-A2-2014/140872
- DE-U1-202010 008 414
- JP-A- 2000 023 531
- US-A1- 2009 044 374
- US-A1- 2013 086 880

## Beschreibung

### Stand der Technik

Es ist bereits ein autonomes Arbeitsgerät, insbesondere ein autonomer Rasenmäher, mit zumindest einer Einsatzwerkzeugaufnahme, mit zumindest einer Antriebseinheit zu einem Antrieb der Einsatzwerkzeugaufnahme und mit zumindest einer Höhenverstelleinheit, welche zu einer Einstellung einer Arbeitshöhe, insbesondere einer Schnitthöhe, eines von der Einsatzwerkzeugaufnahme aufgenommenen Einsatzwerkzeugs vorgesehen ist, vorgeschlagen worden.

EP 2 783 563 A1 offenbart einen autonomen Rasenmäher dessen Schnitthöhenverstellung über einen Druck-Drehtaster realisiert ist, wobei dieser über eine Zahnpaarung ein Stellelement rotieren lässt, die Rotation wiederum rotiert die Werkzeugaufnahme.

US 2013/0086880 A1 offenbart eine Mäheinheit, bei welcher eine Höhenverstellung des Schneidwerks über die Höhenverstellung des Laufrades erfolgt.

DE 20 2010 008 414 U1 offenbart einen autonomen Rasenmäher mit einer Schnitthöhenverstelleinrichtung, welche durch ein einzelnes Betätigungselement realisiert wird.

### Offenbarung der Erfindung

Die Erfindung geht aus von einem autonomen Arbeitsgerät gemäß Anspruch 1 und einem Verfahren zu einer Verstellung einer Arbeitshöhe einer Einsatzwerkzeugaufnahme eines autonomen Arbeitsgeräts gemäß Anspruch 7.

Es wird vorgeschlagen, dass die zumindest eine Höhenverstelleinheit zumindest eine Linearführungseinheit aufweist, welche, zu einer Einstellung der Arbeitshöhe, zu einer translatorischen Führung der Einsatzwerkzeugaufnahme vorgesehen ist, und zumindest ein Betätigungselement aufweist, welches eine Betätigungsrichtung aufweist, die sich zumindest im Wesentlichen parallel zu einer Führungsrichtung der Linearführungseinheit erstreckt. Vorzugsweise ist die Linearführungseinheit von einer gewindelosen Linearführungseinheit gebildet. Besonders bevorzugt ist das Betätigungselement zu einer Einstellung der Arbeitshöhe vorgesehen. Das Betätigungselement wird insbesondere direkt von einem Bediener zu einer Einstellung der Arbeitshöhe betätigt. Unter einem "autonomen Arbeitsgerät" soll hier insbesondere ein Gerät verstanden werden, das sich selbsttätig in einem Bereich und/oder in einer Umgebung fortbewegt, orientiert oder navigiert, insbesondere sich nach einem Anlernprozess selbsttätig in einem Bereich und/oder in einer Umgebung fortbewegt und/oder sich orientiert. Der Ausdruck "selbsttätig fortbewegen und/oder orientieren" soll hier insbesondere eine Fortbewegung, eine Orientierung und/oder Navigation des Arbeitsgeräts, insbesondere nach einem Anlernprozess, ohne einen menschlichen Eingriff definieren. Vorzugsweise bewegt sich das autonome Arbeitsgerät nach einem von einem Bediener mit dem autonomen Arbeitsgerät durchgeführten Anlernprozess selbsttätig in einem Bereich und/oder in einer Umgebung fort bzw. orientiert sich selbsttätig in einem Bereich und/oder in einer Umgebung. Das Arbeitsgerät kann hierbei als autonomer Rasenmäher, als autonomer Staubsauger, als autonome Kehrmaschine, als autonomes Transportfahrzeug, als autonomes Fluggerät, als autonomes Agrargerät o. dgl. ausgebildet sein. Bevorzugt ist das autonome Arbeitsgerät als autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist das autonome Arbeitsgerät besonders bevorzugt eine als Mähwerkeinheit ausgebildete Arbeitsflächenbearbeitungseinheit auf. Die Arbeitsflächenbearbeitungseinheit kann hierbei mittels einer Antriebseinheit, die zumindest zu einem Antrieb einer Fahrwerkseinheit des autonomen Arbeitsgeräts vorgesehen ist, oder mittels einer separaten Mähwerkantriebseinheit, die getrennt von der Antriebseinheit zum Antrieb der Fahrwerkseinheit ausgebildet ist, angetrieben werden.

Unter einer "Einsatzwerkzeugaufnahme" soll in diesem Zusammenhang insbesondere eine Vorrichtung zu einer Aufnahme eines Einsatzwerkzeugs verstanden werden. Vorzugsweise soll darunter insbesondere eine Vorrichtung verstanden werden, an welcher ein Einsatzwerkzeug verliersicher befestigbar ist. Vorzugsweise ist in einem regulären Betrieb an der Einsatzwerkzeugaufnahme insbesondere ein Einsatzwerkzeug verliersicher befestigt. Besonders bevorzugt wird das Einsatzwerkzeug zudem über die Einsatzwerkzeugaufnahme angetrieben. Vorzugsweise ist das Einsatzwerkzeug von einem oder mehreren Messern gebildet. Ferner sind verschiedene, einem Fachmann als sinnvoll erscheinende Antriebseinheiten denkbar, vorzugsweise ist die Antriebseinheit jedoch von einem Verbrennungsmotor oder besonders bevorzugt von einem Elektromotor gebildet. Die Antriebseinheit dient insbesondere zu einem Antrieb des Einsatzwerkzeugs. Eine Antriebskraft der Antriebseinheit wird vorzugsweise über die Einsatzwerkzeugaufnahme auf das Einsatzwerkzeug übertragen.

Des Weiteren soll in diesem Zusammenhang unter einer "Höhenverstelleinheit" insbesondere eine Einheit verstanden werden, welche zu einer Einstellung einer Arbeitshöhe, insbesondere einer Schnitthöhe, des autonomen Arbeitsgeräts vorgesehen ist. Vorzugsweise soll darunter eine Einheit verstanden werden, welche zu einer Einstellung einer Arbeitshöhe, insbesondere einer Schnitthöhe, eines von der Einsatzwerkzeugaufnahme aufgenommenen Einsatzwerkzeugs relativ zu einem Untergrund vorgesehen ist. Eine Einstellung erfolgt dabei insbesondere manuell durch einen Bediener. Besonders bevorzugt ist die Höhenverstelleinheit zu einer werkzeuglosen Einstellung einer Arbeitshöhe, insbesondere einer Schnitthöhe, eines von der Einsatzwerkzeugaufnahme aufgenommenen Einsatzwerkzeugs relativ zu einem Untergrund vorgesehen. Die Arbeitshöhe ist dabei vorzugsweise durch eine parallel zu einem Untergrund und/oder einer Standebene des autonomen Arbeitsgeräts verlaufende Ebene definiert, in welcher ein tiefster Punkt des Einsatzwerkzeugs liegt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner soll unter einer "Linearführungseinheit" in diesem Zusammenhang insbesondere eine Einheit verstanden werden, welche zu einer zumindest im Wesentlichen linearen, insbesondere translatorischen, Führung der Einsatzwerkzeugaufnahme vorgesehen ist. Vorzugsweise soll darunter insbesondere eine Einheit verstanden werden, welche zu einer translatorischen Führung der Einsatzwerkzeugaufnahme relativ zu einem Gehäuse und/oder einer Standebene des autonomen Arbeitsgeräts vorgesehen ist. Eine translatorische Führung der Einsatzwerkzeugaufnahme erfolgt vorzugsweise zumindest im Wesentlichen senkrecht zu einer die Arbeitshöhe definierenden Ebene. Besonders bevorzugt erfolgt die translatorische Führung insbesondere frei von einer Drehbewegung. Unter einem "Betätigungselement" soll in diesem Zusammenhang insbesondere ein Element verstanden werden, welches zu einer direkten Betätigung durch einen Bediener vorgesehen ist. Vorzugsweise soll darunter insbesondere ein Element verstanden werden, auf welches von einem Bediener zur Betätigung direkt eine Betätigungskraft ausgeübt werden muss. Besonders bevorzugt soll darunter insbesondere ein Element verstanden werden, auf welches von einem Bediener zur Betätigung direkt gedrückt werden muss. Grundsätzlich wäre jedoch auch eine andere, einem Fachmann als sinnvoll erscheinende Art der Betätigung denkbar. Des Weiteren soll in diesem Zusammenhang unter einer "Betätigungsrichtung" insbesondere eine Richtung verstanden werden, in welcher sich das Betätigungselement bei einer Betätigung, insbesondere relativ zu einem Gehäuse des autonomen Arbeitsgeräts, bewegt. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts beträgt. Unter "zumindest im Wesentlichen parallel" soll in diesem Zusammenhang insbesondere verstanden werden, dass ein kleinster Winkel zwischen der Betätigungsrichtung und der Führungsrichtung maximal 20°, vorzugsweise maximal 10°, bevorzugt maximal 5° und besonders bevorzugt 0° beträgt. Vorzugsweise bildet die Betätigungsrichtung und die Führungsrichtung jeweils eine Gerade aus, wobei ein kleinster Winkel zwischen den Geraden maximal 20°, vorzugsweise maximal 10°, bevorzugt maximal 5° und besonders bevorzugt 0° beträgt. Eine Richtung der Betätigungsrichtung kann dabei insbesondere sowohl zu einer Richtung der Führungsrichtung gleichgerichtet, als auch entgegengerichtet sein.

Durch die erfindungsgemäße Ausgestaltung des autonomen Arbeitsgeräts kann vorteilhaft intuitive, effiziente und schnelle Einstellung der Höhe erreicht werden. Ferner kann dadurch insbesondere eine vorteilhaft konstruktiv einfache Höhenverstelleinheit bereitgestellt werden. Insbesondere kann dadurch eine werkzeuglose Höhenverstellung erreicht werden.

Ferner wird vorgeschlagen, dass das zumindest eine Betätigungselement zu einer zumindest teilweise direkten, zumindest im Wesentlichen translatorischen Bewegung der zumindest einen Einsatzwerkzeugaufnahme vorgesehen ist. Vorzugsweise ist das zumindest eine Betätigungselement zu einer direkten und translatorischen Bewegung der zumindest einen Einsatzwerkzeugaufnahme vorgesehen. Unter einer "zumindest teilweise direkten Bewegung" soll in diesem Zusammenhang insbesondere eine Bewegung verstanden werden, welche frei von einer Transformation und/oder einer Übersetzung übertragen wird. Vorzugsweise soll darunter insbesondere verstanden werden, dass eine Bewegung des Betätigungselements ohne eine Transformation und/oder eine Übersetzung der Bewegung auf die Einsatzwerkzeugaufnahme übertragen. Die Einsatzwerkzeugaufnahme führt daher bei einer Einstellung einer Arbeitshöhe insbesondere zumindest im Wesentlichen die gleiche Bewegung wie das Betätigungselement durch. Das Betätigungselement erfährt daher bei einer Einstellung einer Arbeitshöhe insbesondere dieselbe Höhenänderung wie die Einsatzwerkzeugaufnahme. Dadurch kann insbesondere eine vorteilhaft intuitive und schnelle Einstellung der Arbeitshöhe erreicht werden. Insbesondere kann für einen Bediener vorteilhaft intuitiv eine Änderung der Arbeitshöhe abgeschätzt werden.

Des Weiteren wird vorgeschlagen, dass das zumindest eine Betätigungselement als Druckelement ausgebildet ist, welches bei einer Betätigung zu einer Absenkung einer Arbeitshöhe direkt die Einsatzwerkzeugaufnahme nach unten bewegt. Vorzugsweise ist das Betätigungselement als eine Drucktaste ausgebildet. Unter einem "Druckelement" soll in diesem Zusammenhang insbesondere ein Betätigungselement verstanden werden, auf welches zu einer Betätigung, insbesondere von einem Bediener, eine Druckkraft ausgeübt werden muss. Vorzugsweise soll darunter insbesondere ein Betätigungselement verstanden werden, auf welches zu einer Betätigung, insbesondere von einem Bediener, gedrückt werden muss. Es sind verschiedene, einem Fachmann als sinnvoll erscheinende Druckelemente denkbar, insbesondere soll darunter jedoch eine Drucktaste bzw. ein Druckknopf verstanden werden. Ferner soll in diesem Zusammenhang unter "direkt" insbesondere frei von einer Transformation und/oder einer Übersetzung verstanden werden. Vorzugsweise soll darunter insbesondere verstanden werden, dass eine Bewegung des Betätigungselements die Einsatzwerkzeugaufnahme ohne eine Transformation und/oder eine Übersetzung nach unten bewegt. Dadurch kann insbesondere eine vorteilhaft intuitive und schnelle Einstellung der Arbeitshöhe erreicht werden. Insbesondere kann für einen Bediener vorteilhaft intuitiv eine Änderung der Arbeitshöhe abgeschätzt werden. Ferner kann dadurch insbesondere ein konstruktiv einfaches und leicht zu bedienendes Betätigungselement bereitgestellt werden.

Es ist zudem erfindungsgemäß, dass die zumindest eine Höhenverstelleinheit zumindest ein Fixierelement aufweist, welches zu einer Fixierung der Einsatzwerkzeugaufnahme in zumindest einer definierten Arbeitshöhe vorgesehen ist. Vorzugsweise ist das zumindest eine Fixierelement zu einer Fixierung der Einsatzwerkzeugaufnahme in zumindest zwei, besonders bevorzugt in zumindest drei definierten Arbeitshöhen vorgesehen. Besonders bevorzugt ist das zumindest eine Fixierelement dazu vorgesehen, die Einsatzwerkzeugaufnahme in einer Arbeitshöhe zu fixieren, in welche die Einsatzwerkzeugaufnahme mittels des zumindest einen Betätigungselements gebracht wurde. Unter einem "Fixierelement" soll in diesem Zusammenhang insbesondere ein Element verstanden werden, welches zu einer positionsfesten Fixierung der Einsatzwerkzeugaufnahme, insbesondere relativ zu einem Gehäuse des autonomen Arbeitsgeräts, vorgesehen ist. Vorzugsweise soll darunter insbesondere ein Element verstanden werden, welches zu einer form- und/oder kraftschlüssigen Fixierung der Einsatzwerkzeugaufnahme vorgesehen ist. Besonders bevorzugt ist die Fixierung zerstörungsfrei lösbar ausgeführt. Dadurch kann insbesondere eine vorteilhaft präzise Einstellung der Arbeitshöhe erreicht werden. Ferner kann dadurch insbesondere eine Einstellung einer definierten Arbeitshöhe ermöglicht werden. Hierdurch kann insbesondere ein vorteilhaft hoher Bedienkomfort erreicht werden.

Es ist erfindungsgemäß, dass die zumindest eine Höhenverstelleinheit zumindest ein weiteres Betätigungselement aufweist, welches zu einer Lösung einer Fixierung des Fixierelements vorgesehen ist. Vorzugsweise ist das weitere Betätigungselement zu einer Lösung einer durch das Fixierelement erzeugten Fixierung der Einsatzwerkzeugaufnahme in einer definierten Arbeitshöhe vorgesehen. Bevorzugt ist das weitere Betätigungselement als ein Druckelement, insbesondere als eine Drucktaste, ausgebildet. Das weitere Betätigungselement wird insbesondere direkt von einem Bediener zu einer Lösung der Fixierung des Fixierelements betätigt. Dadurch kann insbesondere eine vorteilhaft komfortable Höhenverstellung erreicht werden. Insbesondere kann dadurch eine vorteilhaft intuitive und schnelle Einstellung der Arbeitshöhe erreicht werden.

Ferner wird vorgeschlagen, dass die zumindest eine Höhenverstelleinheit zumindest ein Federelement aufweist welches dazu vorgesehen ist, die Einsatzwerkzeugaufnahme in einem unfixierten Zustand in eine Ausgangslage zu bewegen. Vorzugsweise wird die Einsatzwerkzeugaufnahme nach einer Betätigung des weiteren Betätigungselements durch das Federelement automatisch in die Ausgangslage bewegt. Das Federelement ist bevorzugt von einer Schraubenfeder gebildet. Grundsätzlich ist jedoch auch eine andere, einem Fachmann als sinnvoll erscheinende Ausbildung des Federelements denkbar. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Hierdurch kann insbesondere eine definierte Ausgangslage der Höhenverstelleinheit geschaffen werden, in welche sich das in einem unfixierten Zustand selbsttätig bewegt. Ferner kann dadurch gewährleistet werden, dass sich die Einsatzwerkzeugaufnahme bei einer Betätigung des weiteren Betätigungselements in eine definierte Ausgangslage bewegt. Dadurch kann insbesondere eine vorteilhaft präzise Einstellung der Arbeitshöhe erreicht werden.

Des Weiteren wird vorgeschlagen, dass ein von der Einsatzwerkzeugaufnahme aufgenommenes Einsatzwerkzeug in der Ausgangslage eine maximale Arbeitshöhe aufweist. Vorzugsweise bildet das weitere Betätigungselement insbesondere eine Reset-Taste mittels der die Einsatzwerkzeugaufnahme automatisch in die Ausgangslage mit einer maximalen Arbeitshöhe bewegt wird. Die Einsatzwerkzeugaufnahme wird daher unabhängig von einer aktuellen Arbeitshöhe durch Betätigung des weiteren Betätigungselements auf eine maximale Arbeitshöhe bewegt. Dadurch kann insbesondere eine vorteilhaft intuitive und schnelle Einstellung der Arbeitshöhe erreicht werden.

Es wird ferner vorgeschlagen, dass das zumindest eine Betätigungselement der Höhenverstelleinheit zu einer zumindest teilweise direkten Bewegung der zumindest einen Antriebseinheit vorgesehen ist. Vorzugsweise ist das Betätigungselement der Höhenverstelleinheit zu einer zumindest teilweise direkten Bewegung der zumindest einen Antriebseinheit und der Einsatzwerkzeugaufnahme vorgesehen. Hierdurch kann insbesondere eine gleichbleibende Entfernung zwischen der Antriebseinheit und der Einsatzwerkzeugaufnahme erreicht werden. Insbesondere kann so verhindert werden, dass eine Antriebswelle der Antriebseinheit beispielsweise teleskopisch auf die Einsatzwerkzeugaufnahme übertragen werden muss. Hierdurch kann insbesondere eine vorteilhaft hohe Zuverlässigkeit des autonomen Arbeitsgeräts bereitgestellt werden.

Es wird weiter vorgeschlagen, dass das autonome Arbeitsgerät ein Gehäuse und ein darin aufgenommenes Motoraufnahmegehäuse aufweist, in welchem die Antriebseinheit aufgenommen ist und welches dazu vorgesehen ist, durch die Linearführungseinheit in dem Gehäuse geführt zu werden. Vorzugsweise ist die Linearführungseinheit, zu einer Einstellung der Arbeitshöhe, zu einer direkten translatorischen Führung des Motoraufnahmegehäuses vorgesehen. Bevorzugt dient das Motoraufnahmegehäuse zu einer Aufnahme der Antriebseinheit und zu einer zumindest teilweisen Aufnahme der Einsatzwerkzeugaufnahme. Unter einem "Gehäuse" soll in diesem Zusammenhang insbesondere eine Außenhülle des autonomen Arbeitsgeräts verstanden werden, welche zumindest einen Wesentlichen Teil der Bauteile des autonomen Arbeitsgeräts umgreift. Ferner soll in diesem Zusammenhang unter einem "Motoraufnahmegehäuse" insbesondere eine Einheit verstanden werden, welche zu einer Aufnahme der Antriebseinheit vorgesehen ist. Vorzugsweise soll darunter insbesondere eine Einheit verstanden werden, welche die Antriebseinheit zumindest teilweise umgreift. Besonders bevorzugt soll darunter insbesondere eine Einheit verstanden werden, welche zumindest teilweise eine Motorkapsel bildet. Dabei soll unter "zumindest teilweise umgreifen" insbesondere verstanden werden, dass ein umgriffener Gegenstand in zumindest einer Ebene in einem Winkelbereich von zumindest 180°, vorzugsweise von zumindest 270° und besonders bevorzugt von zumindest 360° von dem Motoraufnahmegehäuse umschlossen wird. Dadurch kann zu einer Höhenverstellung insbesondere das gesamte Motoraufnahmegehäuse bewegt werden. Hierdurch kann insbesondere eine vorteilhaft robuste Höhenverstellung erreicht werden.

Zudem wird vorgeschlagen, dass das Motoraufnahmegehäuse zumindest ein Fixierelement aufweist, welches dazu vorgesehen ist, mit dem zumindest einen Fixierelement der zumindest einen Höhenverstelleinheit zu einer Fixierung einer Arbeitshöhe der Einsatzwerkzeugaufnahme zu interagieren. Vorzugsweise weist das Fixierelement des Motoraufnahmegehäuses mehrere Rastausnehmungen auf, in welche zumindest ein Rastelement des Fixierelements der zumindest einen Höhenverstelleinheit zu einer Fixierung einrastet. Dadurch kann insbesondere eine vorteilhaft robuste und präzise Einstellung der Arbeitshöhe erreicht werden. Ferner kann dadurch insbesondere eine Einstellung einer definierten Arbeitshöhe ermöglicht werden. Hierdurch kann insbesondere ein vorteilhaft hoher Bedienkomfort erreicht werden.

Ferner wird vorgeschlagen, dass das autonome Arbeitsgerät zumindest ein Gehäuse aufweist, welches das zumindest eine Betätigungselement in einer direkten Umgebung des Betätigungselements zumindest teilweise überragt. Vorzugsweise wird das zumindest eine Betätigungselement an zumindest einer Seite, vorzugsweise an zumindest zwei Seiten und besonders bevorzugt an zumindest drei Seiten von dem Gehäuse überragt. Besonders bevorzugt überragt das Gehäuse auch das zumindest eine weitere Betätigungselement in einer direkten Umgebung des weiteren Betätigungselements zumindest teilweise. Darunter, dass "das zumindest eine Betätigungselement in einer direkten Umgebung des Betätigungselements zumindest teilweise von dem Gehäuse überragt wird", soll in diesem Zusammenhang insbesondere verstanden werden, dass, in einer Ebene, welche durch einen geometrischen Mittelpunkt des Betätigungselements verläuft und sich senkrecht zu einer Standebene des autonomen Arbeitsgeräts erstreckt, betrachtet, ein höchster Punkt des Gehäuses in der Ebene über, insbesondere in einer Richtung senkrecht zu der Standebene, einem höchsten Punkt des Betätigungselements in der Ebene liegt. Vorzugsweise weist das Gehäuse, in der Ebene, welche durch einen geometrischen Mittelpunkt des Betätigungselements verläuft und sich senkrecht zu einer Standebene des autonomen Arbeitsgeräts erstreckt, betrachtet, bereits in einer direkten Umgebung, insbesondere horizontal weniger als 20 cm, vorzugsweise weniger als 15 cm und besonders bevorzugt weniger als 10 cm von dem Betätigungselement beabstandet, einen Punkt in der Ebene auf, welcher über einem höchsten Punkt des Betätigungselements in der Ebene liegt. Dadurch kann vorzugsweise ein versehentliches Betätigen des Betätigungselements, wie insbesondere beispielsweise durch einen herunterhängenden oder umherliegenden Ast, verhindert werden. Ferner kann dadurch zudem verhindert werden, dass das autonome Arbeitsgerät mit dem Betätigungselement, insbesondere an Gestrüpp oder einem herunterhängenden oder umherliegenden Ast, hängen bleibt. Es kann insbesondere eine vorteilhaft hohe Betriebssicherheit erreicht werden.

Des Weiteren wird vorgeschlagen, dass das zumindest eine Betätigungselement eine Betätigungskraft von zumindest 10 N aufweist. Vorzugsweise weist das Betätigungselement eine Betätigungskraft von zumindest 20 N, vorzugsweise von zumindest 30 N und besonders bevorzugt von zumindest 50 N auf. Bevorzugt ist die Betätigungskraft insbesondere höher, als die Gewichtkraft eines Astes. Besonders bevorzugt weist auch das zumindest eine weitere Betätigungselement eine Betätigungskraft von zumindest 10 N, vorzugsweise von zumindest 20 N, bevorzugt von zumindest 30 N und besonders bevorzugt von zumindest 50 N auf. Dadurch kann besonders bevorzugt ein versehentliches Betätigen des Betätigungselements, wie insbesondere beispielsweise durch einen herunterhängenden oder umherliegenden Ast, verhindert werden. Es kann insbesondere eine vorteilhaft hohe Betriebssicherheit erreicht werden.

Ferner geht die Erfindung aus von einem Verfahren zu einer Verstellung einer Arbeitshöhe einer Einsatzwerkzeugaufnahme des autonomen Arbeitsgeräts. Es wird vorgeschlagen, dass das zumindest eine Betätigungselement der Höhenverstelleinheit zu einer Veränderung einer Arbeitshöhe eines von der Einsatzwerkzeugaufnahme aufgenommenen Einsatzwerkzeugs parallel zu einer Führungsrichtung einer Linearführungseinheit betätigt wird. Dadurch kann insbesondere eine vorteilhaft intuitive und schnelle Einstellung der Arbeitshöhe erreicht werden. Insbesondere kann für einen Bediener vorteilhaft intuitiv eine Änderung der Arbeitshöhe abgeschätzt werden. Insbesondere kann für einen Bediener vorteilhaft intuitiv eine Änderung der Arbeitshöhe abgeschätzt werden.

Des Weiteren wird vorgeschlagen, dass die Einsatzwerkzeugaufnahme in einer Lage, in welche die Einsatzwerkzeugaufnahme mittels des Betätigungselements gedrückt wurde, mittels des Fixierelements fixiert wird. Dadurch kann insbesondere eine vorteilhaft präzise Einstellung der Arbeitshöhe erreicht werden. Ferner kann dadurch insbesondere eine Einstellung einer definierten Arbeitshöhe ermöglicht werden. Hierdurch kann insbesondere ein vorteilhaft hoher Bedienkomfort erreicht werden.

Es wird ferner vorgeschlagen, dass die Einsatzwerkzeugaufnahme bei einer Betätigung des weiteren Betätigungselements selbsttätig in eine Ausgangslage bewegt wird. Das weitere Betätigungselement wird insbesondere direkt von einem Bediener zu einer Lösung der Fixierung des Fixierelements betätigt. Dadurch kann insbesondere eine vorteilhaft komfortable Höhenverstellung erreicht werden. Insbesondere kann dadurch eine vorteilhaft intuitive und schnelle Einstellung der Arbeitshöhe erreicht werden.

Das erfindungsgemäße autonome Arbeitsgerät sowie das Verfahren sollen hierbei nicht auf die oben beschriebene Anwendung und Ausführungsform beschränkt sein. Insbesondere können das erfindungsgemäße autonome Arbeitsgerät sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: ein erfindungsgemäßes autonomes Arbeitsgerät mit einem Gehäuse und mit einer Höhenverstelleinheit in einer schematischen Darstellung,
- Fig. 2: das erfindungsgemäße autonome Arbeitsgerät mit der Höhenverstelleinheit, welche eine Linearführungseinheit aufweist, in einer schematischen Schnittdarstellung,
- Fig. 3: einen Teilausschnitt III-III des erfindungsgemäßen autonomen Arbeitsgerät mit der Höhenverstelleinheit in einer schematischen Schnittdarstellung, in einem ersten Betriebszustand,
- Fig. 4: der Teilausschnitt III-III des erfindungsgemäßen autonomen Arbeitsgerät mit der Höhenverstelleinheit in einer schematischen Schnittdarstellung, in einem zweiten Betriebszustand,
- Fig. 5: einen Teilausschnitt des erfindungsgemäßen autonomen Arbeitsgerät mit der Höhenverstelleinheit in einer schematischen Explosionsdarstellung und
- Fig. 6: ein schematisches Ablaufdiagramm eines Verfahren zu einer Verstellung einer Arbeitshöhe des Einsatzwerkzeugaufnahme des erfindungsgemäßen autonomen Arbeitsgeräts.

### Beschreibung des Ausführungsbeispiels

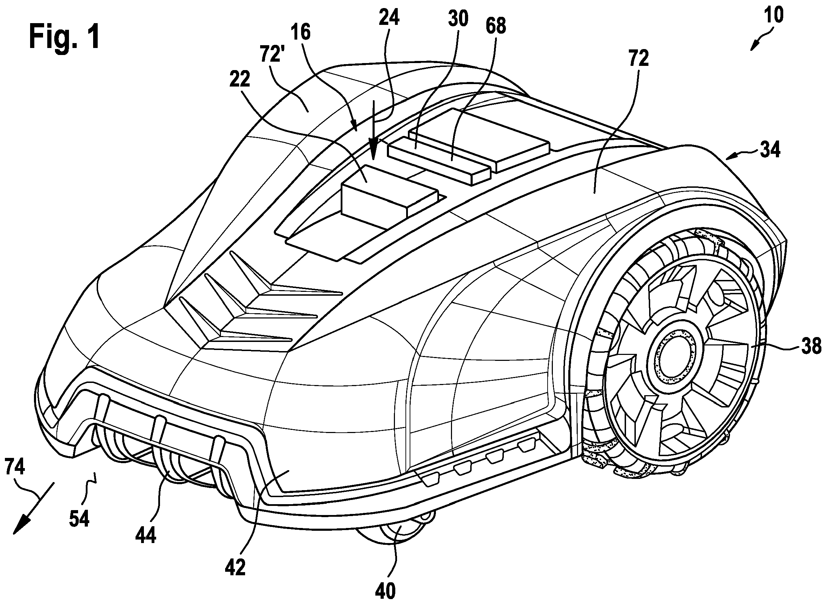

Figur 1 zeigt ein autonomes Arbeitsgerät 10. Das autonome Arbeitsgerät 10 ist von einem autonomen Rasenmäher gebildet. Das autonome Arbeitsgerät 10 ist zu einer Bearbeitung einer Rasenfläche vorgesehen. Das autonome Arbeitsgerät 10 ist dazu vorgesehen, eine Rasenfläche zu mähen. Ferner ist das autonome Arbeitsgerät 10 zu einer autonomen Fortbewegung vorgesehen. Das autonome Arbeitsgerät 10 weist zu einer Fortbewegung zwei angetriebene Hinterräder 38, 38' sowie zwei lenkbare Vorderräder 40, 40' auf. Die Hinterräder 38, 38' werden von einer nicht weiter sichtbaren Antriebseinheit angetrieben. Die Vorderräder 40, 40' werden von einer nicht weiter sichtbaren Antriebseinheit zu einer Veränderung einer Ausrichtung horizontal verdreht. Die Fortbewegung des autonomen Arbeitsgeräts 10 wird von einer nicht weiter sichtbaren Recheneinheit gesteuert. Ferner weist das autonome Arbeitsgerät 10 ein Gehäuse 34 auf. Das Gehäuse 34 ist von einem Kunststoffgehäuse gebildet. Das Gehäuse 34 weist eine obere Gehäuseschale 42 und eine untere Gehäuseschale 44 auf. Die obere Gehäuseschale 42 ist mit der unteren Gehäuseschale 44 verschraubt. Die untere Gehäuseschale 44 bildet ein Chassis des autonomen Arbeitsgeräts 10.

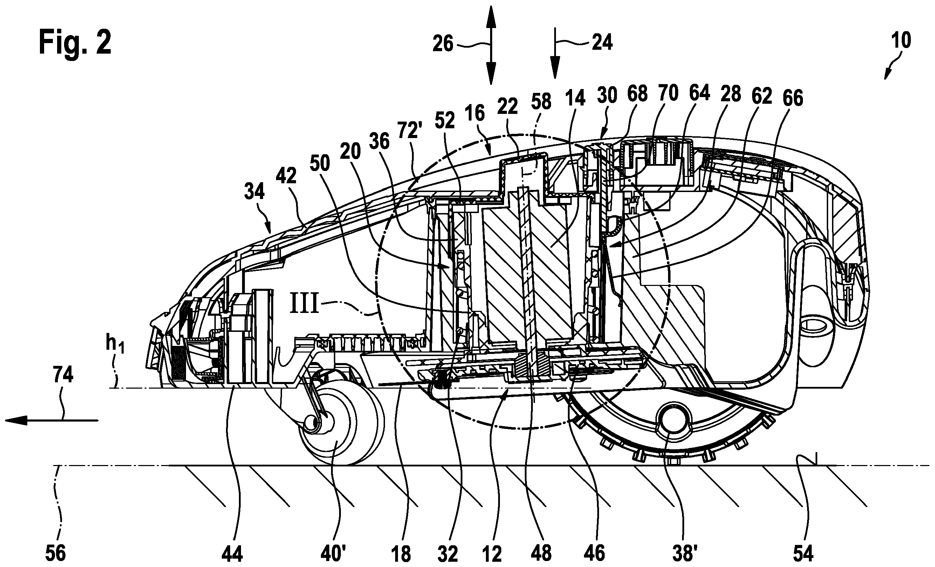

Ferner weist das autonome Arbeitsgerät 10 eine Einsatzwerkzeugaufnahme 12 auf. Die Einsatzwerkzeugaufnahme 12 dient zu einer Aufnahme eines Einsatzwerkzeugs 18. Das Einsatzwerkzeug 18 wird direkt an der Einsatzwerkzeugaufnahme 12 befestigt. Die Einsatzwerkzeugaufnahme 12 weist eine antriebbare Drehscheibe 46 auf. Das Einsatzwerkzeug 18 wird direkt an der Drehscheibe 46 der Einsatzwerkzeugaufnahme 12 befestigt. Das Einsatzwerkzeug 18 besteht aus mehreren Messern. Die Messer des Einsatzwerkzeugs 18 sind an die Drehscheibe 46 der Einsatzwerkzeugaufnahme 12 angeschraubt. Grundsätzlich wäre jedoch auch eine alternative Befestigung denkbar. Des Weiteren weist das autonome Arbeitsgerät 10 eine Antriebseinheit 14 auf. Die Antriebseinheit 14 ist von einem Elektromotor gebildet. Die Antriebseinheit 14 ist zu einem Antrieb der Einsatzwerkzeugaufnahme 12 vorgesehen. Die Antriebseinheit 14 ist zu einem Antrieb des Einsatzwerkzeugs 18 vorgesehen. Die Antriebseinheit 14 weist eine Antriebswelle 48 auf, welche mit der Drehscheibe 46 der Einsatzwerkzeugaufnahme 12 drehfest verbunden ist. Über die Antriebswelle 48 und die Drehscheibe 46 der Einsatzwerkzeugaufnahme 12 wird das Einsatzwerkzeug 18 angetrieben. Eine Achse 58 der Antriebseinheit 14 bzw. der Antriebswelle 48 ist gegenüber einer Vertikalen geneigt. Die Achse 58 der Antriebseinheit 14 ist gegenüber einer Achse senkrecht zu einer Standebene 56 des autonomen Arbeitsgeräts 10 geneigt. Die Achse 58 der Antriebseinheit 14 ist gegenüber einer Normalen senkrecht zu einer Standebene 56 des autonomen Arbeitsgeräts 10 um 3° geneigt. Die Achse 58 der Antriebseinheit 14 bildet eine Drehachse der Einsatzwerkzeugaufnahme 12 sowie des Einsatzwerkzeugs 18. Hierdurch kann ein vorteilhaft effizientes Schneiden des Einsatzwerkzeugs 18 ermöglicht werden. Durch die Neigung der Achse 58 kann ein Widerstand auf das Einsatzwerkzeug 18 während es über das Gras geleitet verringert werden. Es wird daher während eines Betriebs, während einer Vorwärtsbewegung lediglich mit der Vorderkante des Einsatzwerkzeugs 18 geschnitten (Figur 2).

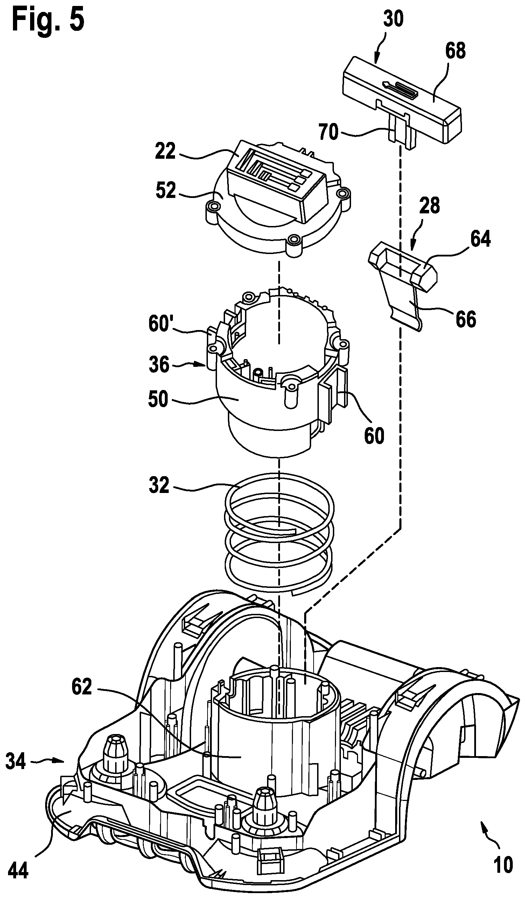

Des Weiteren weist das autonome Arbeitsgerät 10 und ein in dem Gehäuse 34 aufgenommenes Motoraufnahmegehäuse 36 auf. Das Motoraufnahmegehäuse 36 ist zu einer Aufnahme der Antriebseinheit 14 vorgesehen. Die Antriebseinheit 14 wird von dem Motoraufnahmegehäuse 36 umschlossen. Das Motoraufnahmegehäuse 36 dient zudem zur Aufnahme eines nicht weiter sichtbaren Kühlsystems. Das Motoraufnahmegehäuse 36 weist eine annähernd zylindrische Grundform auf. Das Motoraufnahmegehäuse 36 weist einen Grundkörper 50 und einen Deckel 52 auf. Der Grundkörper 50 bildet einen Aufnahmebereich zur Aufnahme der Antriebseinheit 14. Der Aufnahmebereich wird von dem Deckel 52 zu einer Seiten hin, in einem regulär stehenden Zustand des autonomen Arbeitsgeräts 10 nach oben hin, abgeschlossen. Der Deckel 52 ist fest mit dem Grundkörper 50 verschraubt. Grundsätzlich wäre jedoch auch eine andere, einem Fachmann als sinnvoll erscheinende Verbindung denkbar. In einem dem Deckel 52 abgewandten Boden des Grundkörpers 50, weist der Grundkörper 50 eine Ausnehmung auf, über welcher die Antriebswelle 48 aus dem Motoraufnahmegehäuse 36 geführt ist. In der Ausnehmung des Grundkörpers 50 ist zudem ein Lager zur Lagerung der Antriebswelle 48 eingepresst. Auf einer dem Deckel 52 abgewandten Seite des Motoraufnahmegehäuses 36 ist die Einsatzwerkzeugaufnahme 12 angeordnet und mit der Antriebswelle 48 verbunden (Figur 2, 5).

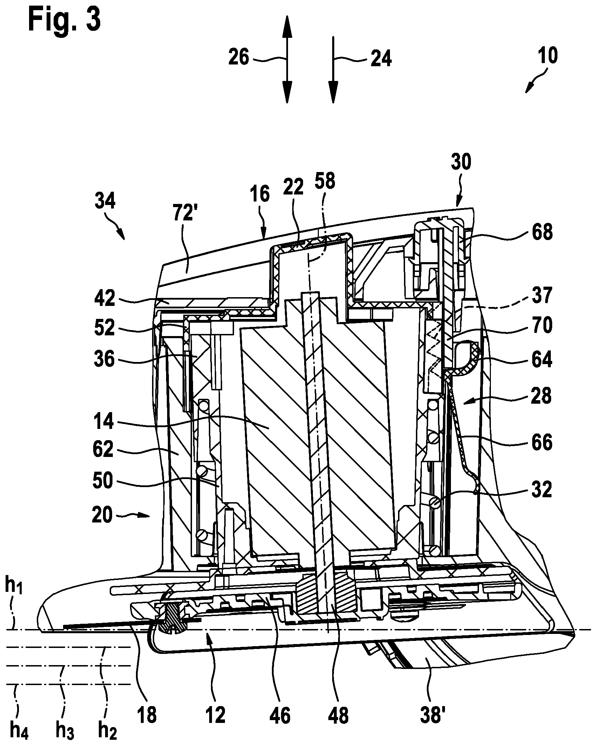

Ferner weist das autonome Arbeitsgerät 10 eine Höhenverstelleinheit 16 auf. Die Höhenverstelleinheit 16 ist zu einer Einstellung einer Arbeitshöhe h₁, h₂, h₃, h₄ des von der Einsatzwerkzeugaufnahme 12 aufgenommen Einsatzwerkzeugs 18. Die Arbeitshöhe h₁, h₂, h₃, h₄ des Einsatzwerkzeugs 18 definiert eine Schnitthöhe des Einsatzwerkzeugs 18. Über die Höhenverstelleinheit 16 kann ein Bediener eine von ihm gewünschte Arbeitshöhe h₁, h₂, h₃, h₄ einstellen. Die Höhenverstelleinheit 16 ist zu einer werkzeuglosen Einstellung der Arbeitshöhe h₁, h₂, h₃, h₄ des Einsatzwerkzeugs 18 relativ zu einem Untergrund 54 vorgesehen. Die Arbeitshöhe h₁, h₂, h₃, h₄ ist dabei vorzugsweise durch eine parallel zu dem Untergrund 54 bzw. einer Standebene 56 des autonomen Arbeitsgeräts 10 verlaufende Ebene definiert, in welcher ein tiefster Punkt des Einsatzwerkzeugs 18 liegt. Die Höhenverstelleinheit 16 weist eine Linearführungseinheit 20 auf. Die Linearführungseinheit 20 ist, zu einer Einstellung der Arbeitshöhe h₁, h₂, h₃, h₄, zu einer translatorischen Führung der Einsatzwerkzeugaufnahme 12 vorgesehen. Die Linearführungseinheit 20 ist zu einer translatorischen Führung der Einsatzwerkzeugaufnahme 12 und der Antriebseinheit 14 vorgesehen. Die Linearführungseinheit 20 ist hierfür zu einer direkten translatorischen Führung des Motoraufnahmegehäuses 36 vorgesehen. Das Motoraufnahmegehäuse 36 ist dazu vorgesehen, durch die Linearführungseinheit 20 in dem Gehäuse 34 geführt zu werden. Die Linearführungseinheit 20 weist hierzu zwei Führungsprofile 60, 60' auf, welche fest mit dem Motoraufnahmegehäuse 36 verbunden sind. Die Führungsprofile 60, 60' sind einstückig mit dem Grundkörper 50 des Motoraufnahmegehäuses 36 verbunden. Die Führungsprofile 60, 60' sind auf gegenüberliegenden Seiten einer Mantelaußenfläche des Grundkörpers 50 angeordnet. Die Führungsprofile 60, 60' der Linearführungseinheit 20 greifen in nicht weiter sichtbare Führungsnuten des Gehäuses 34 ein. Die Führungsprofile 60, 60' der Linearführungseinheit 20 greifen in nicht weiter sichtbare Führungsnuten der unteren Gehäuseschale 44 des Gehäuses 34 ein. Die Führungsnuten sind in einer Innenseite eines Führungszylinders 62 der unteren Gehäuseschale 44 des Gehäuses 34 eingebracht. Das Motoraufnahmegehäuse 36 ist in dem Führungszylinder 62 des Gehäuses 34 geführt. Das Motoraufnahmegehäuse 36 wird teilweise von dem Führungszylinder 62 des Gehäuses 34 umgriffen. Das Motoraufnahmegehäuse 36 ragt teilweise durch eine Ausnehmung in einem Boden des Führungszylinders 62. Der Führungszylinder 62 weist eine nicht weiter sichtbare integrierte Dämpfung auf. Die integrierte Dämpfung steuern die Stabilität und die Geschwindigkeit, in der Motoraufnahmegehäuse 36 in dem Führungszylinder 62 geführt ist. Ferner schafft die Dämpfung Antivibrationseigenschaften. Die Dämpfung besteht aus sechs Dämpfungselementen, welche auf einem Boden des Führungszylinders 62 angeordnet sind (Figur 3).

Die Höhenverstelleinheit 16 weist ferner ein Betätigungselement 22 auf. Das Betätigungselement 22 ist als Druckelement ausgebildet. Das Betätigungselement 22 ist als eine Drucktaste ausgebildet. Das Betätigungselement 22 ist auf einer dem Grundkörper 50 des Motoraufnahmegehäuses 36 angewandten Seite des Deckels 52 des Motoraufnahmegehäuses 36 angeordnet. Das Betätigungselement 22 ist auf einer Oberseite des Deckels 52 des Motoraufnahmegehäuses 36 angeordnet. Das Betätigungselement 22 ist einstückig mit dem Deckel 52 des Motoraufnahmegehäuses 36 ausgebildet. Das Betätigungselement 22 ragt durch eine Ausnehmung in dem Gehäuse 34 aus dem Gehäuse 34 heraus. Das Betätigungselement 22 ragt durch eine Ausnehmung in der oberen Gehäuseschale 42 des Gehäuses 34 aus dem Gehäuse 34 heraus. Das Betätigungselement 22 weist ferner eine Betätigungsrichtung 24 auf, die sich parallel zu einer Führungsrichtung 26 der Linearführungseinheit 20 erstreckt. Die Führungsrichtung 26 der Linearführungseinheit 20 erstreckt sich senkrecht zu der Standebene 56 des autonomen Arbeitsgeräts 10. Die Achse 58 der Antriebseinheit 14 ist gegenüber der Führungsrichtung 26 der Linearführungseinheit 20 geneigt. Grundsätzlich wäre jedoch auch denkbar, dass sich die Führungsrichtung 26 parallel zu der Achse 58 der Antriebseinheit 14 erstreckt. Das Betätigungselement 22 ist zu einer teilweise direkten und translatorischen Bewegung der Einsatzwerkzeugaufnahme 12 vorgesehen. Ferner ist das Betätigungselement 22 der Höhenverstelleinheit 16 zu einer direkten Bewegung der Antriebseinheit 14 vorgesehen. Eine Bewegung des Betätigungselements 22 wird daher frei von einer Transformation oder einer Übersetzung auf die Einsatzwerkzeugaufnahme 12 und die Antriebseinheit 14 übertragen. Die Einsatzwerkzeugaufnahme 12 führt daher bei einer Einstellung einer Arbeitshöhe h₁, h₂, h₃, h₄ die gleiche Bewegung wie das Betätigungselement 22 durch. Eine Bewegung des Betätigungselements 22 wird über den Deckel 52 des Motoraufnahmegehäuses 36 auf den Grundkörper 50 des Motoraufnahmegehäuses 36 übertragen. Die Bewegung des Motoraufnahmegehäuses 36 wird durch die feste Aufnahme der Antriebseinheit 14 in dem Motoraufnahmegehäuse 36 auf die Antriebseinheit 14 und von dieser über die Antriebswelle 48 auf die Einsatzwerkzeugaufnahme 12 übertragen. Das Betätigungselement 22 bewegt die Einsatzwerkzeugaufnahme 12 bei einer Betätigung zu einer Absenkung der Arbeitshöhe h₁, h₂, h₃, h₄ direkt nach unten. Bei einem Drücken des Betätigungselements 22 wird daher das gesamte Motoraufnahmegehäuse 36, die Antriebseinheit 14 und die Einsatzwerkzeugaufnahme 12 nach unten bewegt (Figur 3, 4, 5).

Ferner weist die Höhenverstelleinheit 16 ein Fixierelement 28 auf. Das Fixierelement 28 ist zu einer Fixierung der Einsatzwerkzeugaufnahme 12 in drei definierten Arbeitshöhe h₂, h₃, h₄ vorgesehen. Eine Anzahl von fixierbaren Arbeitshöhen ist hier lediglich beispielhaft. Grundsätzlich wäre auch eine andere, einem Fachmann als sinnvoll erscheinende Anzahl fixierbarer Arbeitshöhen denkbar. Grundsätzlich wäre auch eine stufenlose Einstellung bzw. Fixierung der Arbeitshöhe denkbar. Das Fixierelement 28 ist in dem Führungszylinder 62 des Gehäuses 34 angeordnet. Das Fixierelement 28 ist in dem Führungszylinder 62 des Gehäuses 34 neben dem Motoraufnahmegehäuse 36 angeordnet. Das Fixierelement 28 ist drehbar in dem Führungszylinder 62 angeordnet. Eine Drehachse des Fixierelements 28 erstreckt sich senkrecht zu der Führungsrichtung 26 der Linearführungseinheit 20 und parallel zu der Standebene 56 des autonomen Arbeitsgeräts 10. Das Fixierelement 28 weist einen Fixiergrundkörper 64 und eine Federlasche 66 auf. Die Federlasche 66 ist einstückig mit dem Fixiergrundkörper 64 ausgebildet. Die Federlasche 66 ragt nach unten aus dem Fixiergrundkörper 64 und stützt sich mit einem dem Fixiergrundkörper 64 abgewandten Ende an einer Innenseite des Führungszylinders 62 ab. Durch die Federlasche 66 wird eine Verdrehung des Fixiergrundkörpers 64 um die Drehachse des Fixierelements 28 federbeaufschlagt. Der Fixiergrundkörper 64 wird daher mittels der Federlasche 66 nach einem Verdrehen in eine Ausgangslage zurückverdreht. Die Federlasche 66 besteht aus einem federelastischen Kunststoff. Der Fixiergrundkörper 64 weist auf einer dem Motoraufnahmegehäuse 36 zugewandten Seite eine Rastnase auf (Figur 3, 4, 5).

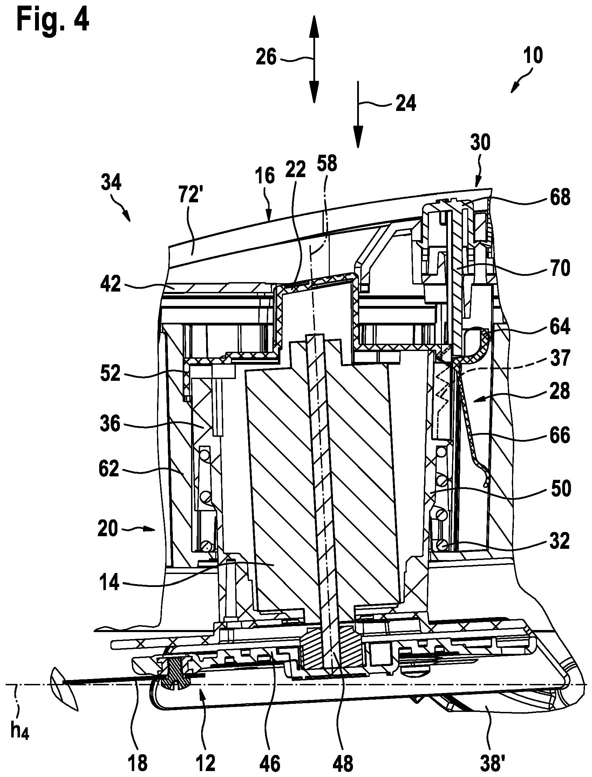

Das Motoraufnahmegehäuse 36 weist ebenfalls ein Fixierelement 37 auf. Das Fixierelement 37 des Motoraufnahmegehäuses 36 ist dazu vorgesehen, mit dem Fixierelement 28 der Höhenverstelleinheit 16 zu einer Fixierung einer Arbeitshöhe h₂, h₃, h₄ der Einsatzwerkzeugaufnahme 12 zu interagieren. Das Fixierelement 37 des Motoraufnahmegehäuses 36 ist an einer dem Fixierelement 28 der Höhenverstelleinheit 16 zugewandten Außenseite des Motoraufnahmegehäuses 36 angeordnet. Das Fixierelement 37 des Motoraufnahmegehäuses 36 weist mehrere Rastausnehmungen aus. Jeder der Rastausnehmungen ist jeweils eine fixierbare Arbeitshöhe h₂, h₃, h₄ zugeordnet. Die Rastnase des Fixiergrundkörpers 64 kann jeweils zu einer Fixierung der Einsatzwerkzeugaufnahme 12 in einer der drei definierten Arbeitshöhen h₂, h₃, h₄ in der entsprechenden Rastausnehmung des Fixierelements 37 des Motoraufnahmegehäuses 36 einrasten (Figur 3, 4).

Ferner weist die Höhenverstelleinheit 16 ein Federelement 32 auf. Das Federelement 32 ist von einer Schraubenfeder gebildet. Die Federachse des Federelements 32 erstreckt sich parallel zu der Führungsrichtung 26 der Linearführungseinheit 20. Das Federelement 32 stützt sich mit einem unteren Ende auf einem Boden des Führungszylinders 62 ab. Mit einem oberen Ende stützt sich das Federelement 32 an einer außenliegenden Mantelfläche des Motoraufnahmegehäuses 36 ab. Der Grundkörper 50 des Motoraufnahmegehäuses 36 bildet zu einer Aufnahme des oberen Endes des Federelements 32 eine Wulst aus, welche das obere Ende des Federelements 32 teilweise aufnimmt. Das Federelement 32 ist dazu vorgesehen, die Einsatzwerkzeugaufnahme 12 in einem unfixierten Zustand in eine Ausgangslage zu bewegen. Das Federelement 32 ist dazu vorgesehen, das Motoraufnahmegehäuse 36 in einem unfixierten Zustand in eine Ausgangslage zu bewegen. In einem unfixierten Zustand wird das Motoraufnahmegehäuse 36 von dem Federelement 32 nach oben gegen die obere Gehäuseschale 42 des Gehäuses 34 in eine Ausgangslage gedrückt. Die obere Gehäuseschale 42 des Gehäuses 34 dient hierbei als Anschlag. Bei einer Betätigung des Betätigungselements 22 drückt das Federelement 32 gegen eine Betätigungskraft eines Bedieners. Das Betätigungselement 22 weist eine Betätigungskraft von mehr als 20 N auf. Die Betätigungskraft des Betätigungselements 22 ist höher, als die Gewichtkraft eines Astes. Die Betätigungskraft des Betätigungselements 22 wird durch das Federelement 32 erzeugt. Ferner dient das Federelement 32 dazu, das Motoraufnahmegehäuse 36 mit einer Vorspannung zu beaufschlagen, um Vibrationen und daraus resultierende Geräuschentwicklung zu verhindern (Figur 3, 4).

Bei einer Betätigung des Betätigungselements 22 wird der Fixiergrundkörper 64 durch das Fixierelement 37 des Motoraufnahmegehäuses 36 gegen die Federkraft der Federlasche 66 verdreht, sodass das Fixierelement 28 der Höhenverstelleinheit 16 außer Eingriff mit dem Fixierelement 37 des Motoraufnahmegehäuses 36 kommt und eine tiefere Arbeitshöhe h₂, h₃, h₄ eingestellt werden kann. Ein Bediener muss dabei das Betätigungselement 22 gegen die Federkraft des Federelements 32 nach unten drücken. Die Rastnase des Fixiergrundkörpers 64 rastet dabei jeweils in die nächst tiefer liegende Rastausnehmung des Fixierelements 37 des Motoraufnahmegehäuses 36 ein. Wird eine Betätigung beendet verbleibt die Rastnase des Fixiergrundkörpers 64 jeweils in der aktuellen Rastausnehmung des Fixierelements 37 des Motoraufnahmegehäuses 36 und fixiert damit die aktuelle Arbeitshöhe h₂, h₃, h₄ der Einsatzwerkzeugaufnahme 12. Die Rastnase des Fixiergrundkörpers 64 des Fixierelements 28 der Höhenverstelleinheit 16 wird dabei durch das Federelement 32 in einem fixierten Zustand gegen eine Stirnseite einer der Rastausnehmungen des Fixierelements 37 des Motoraufnahmegehäuses 36. Ferner findet eine Fixierung dadurch statt, dass der Fixiergrundkörper 64 ausgehend von einer Ruhelage lediglich in eine Richtung gegen die Federkraft der Federlasche 66 verdreht werden kann, nicht jedoch in die andere Richtung. Durch das Federelement 32 wird das Fixierelement 28 daher in der aktuellen Rastausnehmung des Fixierelements 37 gehalten. Durch die Betätigung des Betätigungselements 22 verrastet der Fixiergrundkörper 64 jeweils mit einer höher liegenden Rastausnehmung des Fixierelements 37 des Motoraufnahmegehäuses 36 (Figur 3).

Des Weiteren weist die Höhenverstelleinheit 16 ein weiteres Betätigungselement 30 auf. Das weitere Betätigungselement 30 ist als Druckelement ausgebildet. Das weitere Betätigungselement 30 ist als eine Drucktaste ausgebildet. Das weitere Betätigungselement 30 ist federnd in dem Gehäuse 34 des autonomen Arbeitsgeräts 10 gelagert. Das weitere Betätigungselement 30 weist ebenfalls eine Betätigungskraft von mehr als 20 N auf. Das weitere Betätigungselement 30 weist einen Betätigungsgrundkörper 68 welcher aus dem Gehäuse 34 des autonomen Arbeitsgeräts 10 ragt und zu einer Betätigung von einem Bediener direkt kontaktiert wird. Ferner weist das weitere Betätigungselement 30 einen Fortsatz 70 auf, welcher nach unten aus dem Betätigungsgrundkörper 68 ragt. Der Fortsatz 70 ist einstückig mit dem Betätigungsgrundkörper 68 ausgebildet. Der Fortsatz 70 erstreckt sich von dem Betätigungsgrundkörper 68 bis zu dem Fixiergrundkörper 64 des Fixierelements 28 der Höhenverstelleinheit 16. Das weitere Betätigungselement 30 ist zu einer Lösung der Fixierung des Fixierelements 28 vorgesehen. Bei einer Betätigung des weiteren Betätigungselement 30 drückt der Fortsatz 70 auf einer der Rastnase zugewandten Seite der Drehachse des Fixiergrundkörper 64 auf den Fixiergrundkörper 64 des Fixierelements 28 der Höhenverstelleinheit 16, sodass sich der Fixiergrundkörper 64 gegen die Federkraft der Federlasche 66 verdreht. Dadurch wird das Motoraufnahmegehäuse 36 freigegeben und durch das Federelement 32 in eine Ausgangslage bewegt, sofern sich das Motoraufnahmegehäuse 36 nicht bereits in der Ausgangslage befindet. Das in der Einsatzwerkzeugaufnahme 12 aufgenommene Einsatzwerkzeug 18 weist in der Ausgangslage eine maximale Arbeitshöhe h₁ auf (Figur 3).

Das Gehäuse 34 überragt das Betätigungselement 22 in einer direkten Umgebung des Betätigungselements 22. Ferner überragt das Gehäuse 34 auch das weitere Betätigungselement 30 in einer direkten Umgebung des weiteren Betätigungselements 30. Die obere Gehäuseschale 42 des Gehäuses 34 bildet auf beiden Seiten des Betätigungselements 22 sowie des weiteren Betätigungselements 30 jeweils einen erhöhten Steg 72, 72' aus. Die Stege 72, 72' erstrecken sich im Wesentlichen parallel zu einer Geradeausfahrtrichtung 74 des autonomen Arbeitsgeräts 10. Die Stege 72, 72' überragen des Betätigungselement 22 sowie das weitere Betätigungselement 30 jeweils in einer Ebene senkrecht zu der Geradeausfahrtrichtung 74 betrachtet. Ferner ist das Betätigungselement 22 und das weitere Betätigungselement 30 teilweise versenkt in der oberen Gehäuseschale 42 des Gehäuses 34 angeordnet (Figur 1).

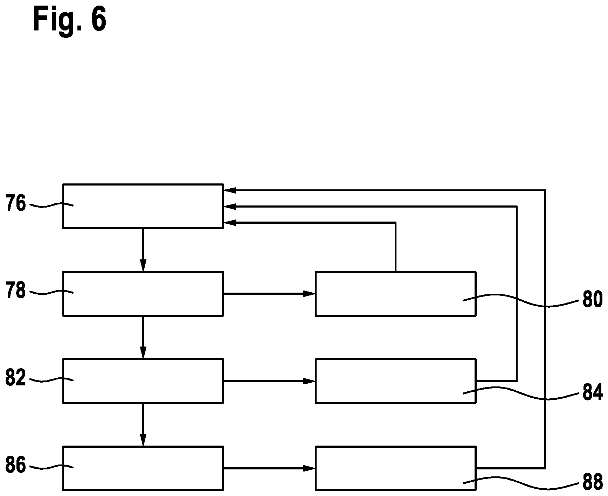

Figur 6 zeigt ein Ablaufdiagramm eines Verfahren zu einer Verstellung der Arbeitshöhe h₁, h₂, h₃, h₄ der Einsatzwerkzeugaufnahme 12 des autonomen Arbeitsgeräts 10. Bei dem Verfahren wird das Betätigungselement 22 der Höhenverstelleinheit 16 zu einer Veränderung einer Arbeitshöhe h₁, h₂, h₃, h₄ des von der Einsatzwerkzeugaufnahme 12 aufgenommenen Einsatzwerkzeugs 18 parallel zu einer Führungsrichtung 26 einer Linearführungseinheit 20 betätigt. In einem ersten Zustand 76 des Verfahrens befindet sich das in der Einsatzwerkzeugaufnahme 12 aufgenommene Einsatzwerkzeug 18 in einer Ausgangslage in der Arbeitshöhe h₁. Das Fixierelement 28 der Höhenverstelleinheit 16 befindet sich in diesem Zustand 76 in einem unfixierten Zustand. Figur 3 zeigt das autonome Arbeitsgerät 10 in diesem Zustand 76. Wird in dem ersten Zustand 76 das Betätigungselement 22 einmal betätigt, springt das autonome Arbeitsgerät 10 in einen zweiten Zustand 78, in welchem das in der Einsatzwerkzeugaufnahme 12 aufgenommene Einsatzwerkzeug 18 eine zweite Arbeitshöhe h₂ aufweist, welche niedriger ist, als die Arbeitshöhe h₁. Das Fixierelement 28 der Höhenverstelleinheit 16 verrastet in diesem Zustand 78 mit einer untersten Rastausnehmung des Fixierelements 37 des Motoraufnahmegehäuses 36. Die Einsatzwerkzeugaufnahme 12 wird daher in einer Lage, in welche die Einsatzwerkzeugaufnahme 12 mittels des Betätigungselements 22 gedrückt wurde, mittels des Fixierelements 28 fixiert. Der Bediener erhält dabei ein Klickgeräusch als Rückmeldung, dass der Zustand 78 erreicht ist. Wird in dem zweiten Zustand 78 in einem Schritt 80 das weitere Betätigungselement 30 betätigt, springt das in der Einsatzwerkzeugaufnahme 12 aufgenommene Einsatzwerkzeug 18 in die Ausgangslage und das autonome Arbeitsgerät 10 befindet sich in dem ersten Zustand 76. Die Einsatzwerkzeugaufnahme 12 wird daher bei einer Betätigung des weiteren Betätigungselements 22 selbsttätig in eine Ausgangslage bewegt. Wird in dem zweiten Zustand 78 das Betätigungselement 22 erneut betätigt, springt das autonome Arbeitsgerät 10 in einen dritten Zustand 82, in welchem das in der Einsatzwerkzeugaufnahme 12 aufgenommene Einsatzwerkzeug 18 eine dritte Arbeitshöhe h₃ aufweist, welche niedriger ist, als die zweite Arbeitshöhe h₂. Das Fixierelement 28 der Höhenverstelleinheit 16 verrastet in diesem Zustand 82 mit einer Rastausnehmung des Fixierelements 37 des Motoraufnahmegehäuses 36. Der Bediener erhält dabei ein Klickgeräusch als Rückmeldung, dass der Zustand 82 erreicht ist. Wird in dem dritten Zustand 82 in einem Schritt 84 das weitere Betätigungselement 30 betätigt, springt das in der Einsatzwerkzeugaufnahme 12 aufgenommene Einsatzwerkzeug 18 in die Ausgangslage und das autonome Arbeitsgerät 10 befindet sich in dem ersten Zustand 76. Wird in dem dritten Zustand 82 das Betätigungselement 22 erneut betätigt, springt das autonome Arbeitsgerät 10 in einen vierten Zustand 86, in welchem das in der Einsatzwerkzeugaufnahme 12 aufgenommene Einsatzwerkzeug 18 eine vierte Arbeitshöhe h₄ aufweist, welche niedriger ist, als die dritte Arbeitshöhe h₃. Das Fixierelement 28 der Höhenverstelleinheit 16 verrastet in diesem Zustand 86 mit einer obersten Rastausnehmung des Fixierelements 37 des Motoraufnahmegehäuses 36. Der Bediener erhält dabei ein Klickgeräusch als Rückmeldung, dass der Zustand 86 erreicht ist. Figur 4 zeigt das autonome Arbeitsgerät 10 in diesem vierten Zustand 86. Wird in dem vierten Zustand 86 in einem Schritt 88 das weitere Betätigungselement 30 betätigt, springt das in der Einsatzwerkzeugaufnahme 12 aufgenommene Einsatzwerkzeug 18 in die Ausgangslage und das autonome Arbeitsgerät 10 befindet sich in dem ersten Zustand 76. Eine erneute Betätigung des Betätigungselements 22 ist in dem vierten Zustand 86 nicht möglich. Grundsätzlich ist es auch möglich durch starkes Drücken des Betätigungselements 22 von dem ersten Zustand 76 in den vierten Zustand 86 zu springen. Das Betätigungselement 22 wird dabei immer so weit nach unten gedrückt, wie sich auch das Einsatzwerkzeug 18 nach unten bewegt. Dadurch kann eine vorteilhafte Rückmeldung für den Bediener erreicht werden. Befindet sich das Betätigungselement 22 in einer oberen Endstellung, ist auch die Arbeitshöhe h₁ in einer höchsten Einstellung. Befindet sich das Betätigungselement 22 in einer unteren Endstellung, ist auch die Arbeitshöhe h₄ in einer niedrigsten Einstellung.

## Patentansprüche

1. Autonomes Arbeitsgerät, insbesondere autonomer Rasenmäher, mit zumindest einer Einsatzwerkzeugaufnahme (12), mit zumindest einer Antriebseinheit (14) zu einem Antrieb der Einsatzwerkzeugaufnahme (12) und mit zumindest einer Höhenverstelleinheit (16), welche zu einer Einstellung einer Arbeitshöhe (h1, h2, h3, h4), insbesondere einer Schnitthöhe, eines von der Einsatzwerkzeugaufnahme (12) aufgenommenen Einsatzwerkzeugs (18) vorgesehen ist, wobei die zumindest eine Höhenverstelleinheit (16) zumindest eine Linearführungseinheit (20) aufweist, welche, zu einer Einstellung der Arbeitshöhe (h1, h2, h3, h4), zu einer translatorischen Führung der Einsatzwerkzeugaufnahme (12) vorgesehen ist, und zumindest ein Betätigungselement (22) aufweist, welches eine Betätigungsrichtung (24) aufweist, die sich zumindest im Wesentlichen parallel zu einer Führungsrichtung (26) der Linearführungseinheit (20) erstreckt, wobei die zumindest eine Höhenverstelleinheit (16) zumindest ein Fixierelement (28) aufweist, welches zu einer Fixierung der Einsatzwerkzeugaufnahme (12) in zumindest einer definierten Arbeitshöhe (h₂, h₃, h₄) vorgesehen ist, **dadurch gekennzeichnet, dass** die zumindest eine Höhenverstelleinheit (16) zumindest ein weiteres Betätigungselement (30) aufweist, welches zu einer Lösung einer Fixierung des Fixierelements (28) vorgesehen ist und die zumindest eine Höhenverstelleinheit (16) zumindest ein Federelement (32) aufweist welches dazu vorgesehen ist, die Einsatzwerkzeugaufnahme (12) in einem unfixierten Zustand in eine Ausgangslage zu bewegen; und/oder dass das zumindest eine Betätigungselement (22) als Drucktaste oder Druckknopf ausgebildet ist, welches bei einer Betätigung zu einer Absenkung der Arbeitshöhe (h1, h2, h3, h4) direkt die Einsatzwerkzeugaufnahme (12) nach unten bewegt.

2. Autonomes Arbeitsgerät nach Anspruch 1, **dadurch gekennzeichnet, dass** das zumindest eine Betätigungselement (22) der Höhenverstelleinheit (16) zu einer zumindest teilweise direkten Bewegung der zumindest einen Antriebseinheit (14) vorgesehen ist.

3. Autonomes Arbeitsgerät nach einem der vorhergehenden Ansprüche, **gekennzeichnet durch** ein Gehäuse (34) und ein darin aufgenommenes Motoraufnahmegehäuse (36), in welchem die Antriebseinheit (14) aufgenommen ist und welches dazu vorgesehen ist, durch die Linearführungseinheit (20) in dem Gehäuse (34) geführt zu werden.

4. Autonomes Arbeitsgerät nach Anspruch 3, **dadurch gekennzeichnet, dass** das Motoraufnahmegehäuse (36) zumindest ein Fixierelement (37) aufweist, welches dazu vorgesehen ist, mit dem zumindest einen Fixierelement (28) der zumindest einen Höhenverstelleinheit (16) zu einer Fixierung einer Arbeitshöhe (h₁, h₂, h₃, h₄) der Einsatzwerkzeugaufnahme (12) zu interagieren.

5. Autonomes Arbeitsgerät nach einem der vorhergehenden Ansprüche, **gekennzeichnet durch** zumindest ein Gehäuse (34), welches das zumindest eine Betätigungselement (22) in einer direkten Umgebung des Betätigungselements (22) zumindest teilweise überragt.

6. Autonomes Arbeitsgerät nach einem der vorhergehenden Ansprüche, **dadurch gekennzeichnet, dass** das zumindest eine Betätigungselement (22) eine Betätigungskraft von zumindest 10 N aufweist.

7. Verfahren zu einer Verstellung einer Arbeitshöhe (h₁, h₂, h₃, h₄) einer Einsatzwerkzeugaufnahme (12) eines autonomen Arbeitsgeräts (10), insbesondere nach einem der vorhergehenden Ansprüche, wobei das zumindest eine Betätigungselement (22) der Höhenverstelleinheit (16) zu einer Veränderung einer Arbeitshöhe (h₁, h₂, h₃, h₄) eines von der Einsatzwerkzeugaufnahme (12) aufgenommenen Einsatzwerkzeugs (18) parallel zu einer Führungsrichtung (26) einer Linearführungseinheit (20) betätigt wird, **dadurch gekennzeichnet, dass** die Einsatzwerkzeugaufnahme (12) in einer Lage, in welche die Einsatzwerkzeugaufnahme (12) mittels des Betätigungselements (22) gedrückt wurde, mittels eines Fixierelements (28) fixiert wird, wobei die Einsatzwerkzeugaufnahme (12) bei einer Betätigung eines weiteren Betätigungselements (30) selbsttätig in eine Ausgangslage bewegt wird.

## Claims

1. Autonomous working device, in particular an autonomous lawnmower, having at least one application tool receptacle (12), having at least one drive unit (14) for driving the application tool receptacle (12), and having at least one height adjustment unit (16), which is provided to set a working height (h₁, h₂, h₃, h₄), in particular a cutting height, of an application tool (18) accommodated in the application tool receptacle (12), wherein the at least one height adjustment unit (16) has at least one linear guide unit (20), which, in order to set the working height (h₁, h₂, h₃, h₄), is provided to guide the application tool receptacle (12) in translation, and has at least one actuating element (22), which has an actuating direction (24) that extends at least substantially parallel to a guiding direction (26) of the linear guide unit (20), wherein the at least one height adjustment unit (16) has at least one fixing element (28), which is provided to fix the application tool receptacle (12) at at least one defined working height (h₂, h₃, h₄), **characterized in that** the at least one height adjustment unit (16) has at least one further actuating element (30), which is provided to release any fixing of the fixing element (28), and the at least one height adjustment unit (16) has at least one spring element (32), which is provided to move the application tool receptacle (12) in an unfixed state into a starting position; and/or **in that** the at least one actuating element (22) is in the form of a push button, which, when actuated to lower the working height (h₁, h₂, h₃, h₄), directly moves the application tool receptacle (12) downwards.

2. Autonomous working device according to Claim 1, **characterized in that** the at least one actuating element (22) of the height adjustment unit (16) is provided to move the at least one drive unit (14) directly at least partially.

3. Autonomous working device according to either of the preceding claims, **characterized by** a housing (34) and a motor-accommodating housing (36), accommodated therein, in which the drive unit (14) is accommodated and which is provided to be guided in the housing (34) by the linear guide unit (20) .

4. Autonomous working device according to Claim 3, **characterized in that** the motor-accommodating housing (36) has at least one fixing element (37), which is provided to interact with the at least one fixing element (28) of the at least one height adjustment unit (16) to fix a working height (h₁, h₂, h₃, h₄) of the application tool receptacle (12).

5. Autonomous working device according to one of the preceding claims, **characterized by** at least one housing (34), which at least partially projects beyond the at least one actuating element (22) in the immediate vicinity of the actuating element (22) .

6. Autonomous working device according to one of the preceding claims, **characterized in that** the at least one actuating element (22) exhibits an actuating force of at least 10 N.

7. Method for adjusting a working height (h₁, h₂, h₃, h₄) of an application tool receptacle (12) of an autonomous working device (10), in particular according to one of the preceding claims, wherein the at least one actuating element (22) of the height adjustment unit (16) is actuated to change a working height (h₁, h₂, h₃, h₄) of an application tool (18), accommodated in the application tool receptacle (12), parallel to a guiding direction (26) of a linear guide unit (20), **characterized in that** the application tool receptacle (12), in a position in which the application tool receptacle (12) has been pushed by means of the actuating element (22), is fixed by means of a fixing element (28), wherein the application tool receptacle (12) is moved automatically into a starting position when a further actuating element (30) is actuated.

## Revendications

1. Appareil de travail autonome, en particulier tondeuse à gazon autonome, comprenant au moins un logement d'outil amovible (12), au moins une unité d'entraînement (14) pour un entraînement du logement d'outil amovible (12) et au moins une unité de réglage en hauteur (16) qui est prévue pour ajuster une hauteur de travail (h1, h2, h3, h4), en particulier une hauteur de coupe d'un outil amovible (18) reçu par le logement d'outil amovible (12), l'au moins une unité de réglage en hauteur (16) présentant au moins une unité de guidage linéaire (20) qui est prévue pour ajuster la hauteur de travail (h1, h2, h3, h4) pour un guidage en translation du logement d'outil amovible (12), et présentant au moins un élément d'actionnement (22) qui présente une direction d'actionnement (24) qui s'étend au moins essentiellement parallèlement à une direction de guidage (26) de l'unité de guidage linéaire (20), l'au moins une unité de réglage en hauteur (16) présentant au moins un élément de fixation (28) qui est prévu pour fixer le logement d'outil amovible (12) à au moins une hauteur de travail définie (h₂, h₃, h₄), **caractérisé en ce que** l'au moins une unité de réglage en hauteur (16) présente au moins un élément d'actionnement supplémentaire (30) qui est prévu pour desserrer une fixation de l'élément de fixation (28) et l'au moins une unité de réglage en hauteur (16) présente au moins un élément de ressort (32) qui est prévu pour déplacer dans une position de départ le logement d'outil amovible (12) dans un état non fixé ; et/ou **en ce que** l'au moins un élément d'actionnement (22) est réalisé sous forme de touche ou de bouton poussoir qui déplace directement vers le bas le logement d'outil amovible (12) dans le cas d'un actionnement en vue d'un abaissement de la hauteur de travail (h1, h2, h3, h4).

2. Appareil de travail autonome selon la revendication 1, **caractérisé en ce que** l'au moins un élément d'actionnement (22) de l'unité de réglage en hauteur (16) est prévu pour un déplacement direct au moins partiel de l'au moins une unité d'entraînement (14).

3. Appareil de travail autonome selon l'une quelconque des revendications précédentes, **caractérisé par** un boîtier (34) et un boîtier de logement de moteur (36) reçu dans celui-ci, dans lequel est reçue l'unité d'entraînement (14) et lequel est prévu pour être guidé dans le boîtier (34) par l'unité de guidage linéaire (20).

4. Appareil de travail autonome selon la revendication 3, **caractérisé en ce que** le boîtier de logement de moteur (36) présente au moins un élément de fixation (37) qui est prévu pour coopérer avec l'au moins un élément de fixation (28) de l'au moins une unité de réglage en hauteur (16) pour une fixation d'une hauteur de travail (h₁, h₂, h₃, h₄) du logement d'outil amovible (12).

5. Appareil de travail autonome selon l'une quelconque des revendications précédentes, **caractérisé par** au moins un boîtier (34) qui fait saillie au moins en partie au-delà de l'au moins un élément d'actionnement (22) dans un environnement direct de l'élément d'actionnement (22).

6. Appareil de travail autonome selon l'une quelconque des revendications précédentes, **caractérisé en ce que** l'au moins un élément d'actionnement (22) présente une force d'actionnement d'au moins 10 N.

7. Procédé de réglage d'une hauteur de travail (h₁, h₂, h₃, h₄) d'un logement d'outil amovible (12) d'un appareil de travail autonome (10), en particulier selon l'une quelconque des revendications précédentes, dans lequel l'au moins un élément d'actionnement (22) de l'unité de réglage en hauteur (16) est actionné pour faire varier une hauteur de travail (h₁, h₂, h₃, h₄) d'un outil amovible (18) reçu par le logement d'outil amovible (12) parallèlement à une direction de guidage (26) d'une unité de guidage linéaire (20), **caractérisé en ce que** le logement d'outil amovible (12) est fixé au moyen d'un élément de fixation (28) dans une position dans laquelle le logement d'outil amovible (12) a été enfoncé au moyen de l'élément d'actionnement (22), le logement d'outil amovible (12), dans le cas d'un actionnement d'un élément d'actionnement supplémentaire (30), étant déplacé automatiquement dans une position de départ.
